# FASCICULE DE BREVET EUROPEEN

(11) **EP 0 489 955 B1**
(45) Date de publication et mention de la délivrance du brevet: **20.09.1995**
(21) Numéro de dépôt: 90123896.4
(22) Date de dépôt: 12.12.1990
(51) Int. Cl.: G01C 9/28, G01C 25/00

(54) **Niveau à bulle et procédé de sa fabrication**
Libellenwaage und Verfahren zu ihrer Herstellung
Spirit level and procedure for manufacturing same

(43) Date de publication de la demande: 17.06.1992
(73) Titulaire: SICFO-STANLEY Société industrielle et commerciale française des outils STANLEY, F-25009 Besançon (FR)
(72) Inventeur: Prouteau Bernard, F-25320 Montferrand le Château (FR)
(74) Mandataire: Beetz & Partner Patentanwälte

(56) Documents cités:
- FR-A- 1 141 672
- FR-A- 1 448 855
- US-A- 2 813 349
- US-A- 3 878 617
- US-A- 4 332 046

## Description

La présente invention concerne un niveau à bulle et son procédé de fabrication selon les préambules des revendications 1 et 7, respectivement.

Un niveau à bulle est un instrument de mesure de précision, dont la fabrication et l'ajustement demandent beaucoup de soin. Le corps d'un niveau à bulle moderne est souvent un profilé en aluminium. Ce profilé peut être un profilé creux ou en forme d'un I ou T. L'aluminium a l'avantage d'être assez rigide pour assurer la précision demandée. D'un autre côté l'aluminium est relativement cher et demande un traitement de surface pour sa protection ou bien coloration.

Il a été proposé comme alternative à un corps de niveau à bulle entièrement en aluminium des profilés en matière plastique, mais les matériaux plastiques qui se prêtent à une fabrication peu coûteuse ne peuvent pas assurer la rigidité demandée à une semelle d'un niveau à bulle de grande dimension. C'est pour cette raison que des niveaux à bulles composites ont été développés comprenant une âme et une semelle sous forme d'un profilé en aluminium surmoulé d'une structure en matière plastique pour le logement de l'élément à bulle et pour la manipulation du niveau à bulle. Dans ce cas-là, la structure en matière plastique comprend une découpe où l'élément à bulle est logé. L'ajustement de l'orientation précise de l'élément à bulle par rapport à la semelle se fait par l'intermédiaire des vis. Dans la position d'un alignement parfait l'élément à bulle est arrêté par de la colle sur la structure en matière plastique.

Ce procédé de fabrication est long et ennuyeux, mais le gain résultant de l'économie effectuée en consommation d'aluminium compense le coût de fabrication élevé.

C'est pourquoi la présente invention vise à réaliser un niveau à bulle du type décrit dans le préambule de la revendication 1 ainsi qu'un procédé de sa fabrication qui puisse être réalisé d'une façon simple et économique tout en assurant la précision exigée et un prix de fabrication faible.

Cet objet selon l'invention est atteint par un niveau à bulle comme par exemple connu des documents US-A-2 813 349 et US-A-3 878 617, et caractérisé par le fait que le corps est fabriqué en résine chargée de particules en verre comme décrit dans la revendication 1 ce qui permet donc la précision exigée tout en diminuant le coût de réalisation. Un procédé de sa fabrication par injection d'une matière thermodurcissable chargée est décrit dans la revendication 7.

Des revendications dépendantes décrivent des modes de réalisation préférés.

Le niveau à bulle suivant l'invention peut être coloré dans la masse de la résine thermodurcissable chargée. Même lorsqu'il est sujet à des égratignures, le profilé garde alors un aspect propre et net.

Les manipulations nécessaires pendant sa fabrication se limitent à un minimum.

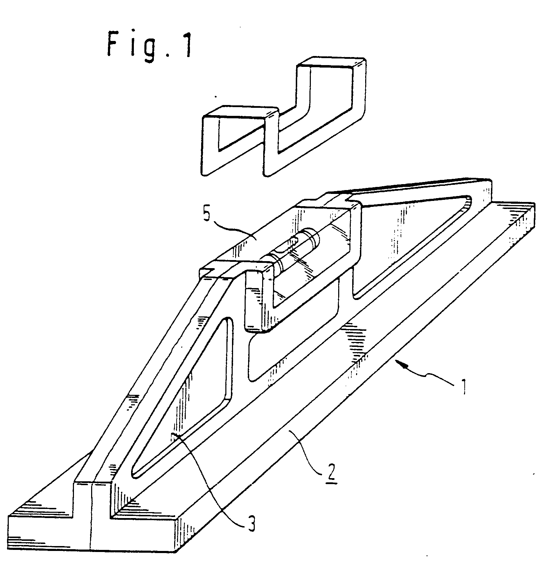

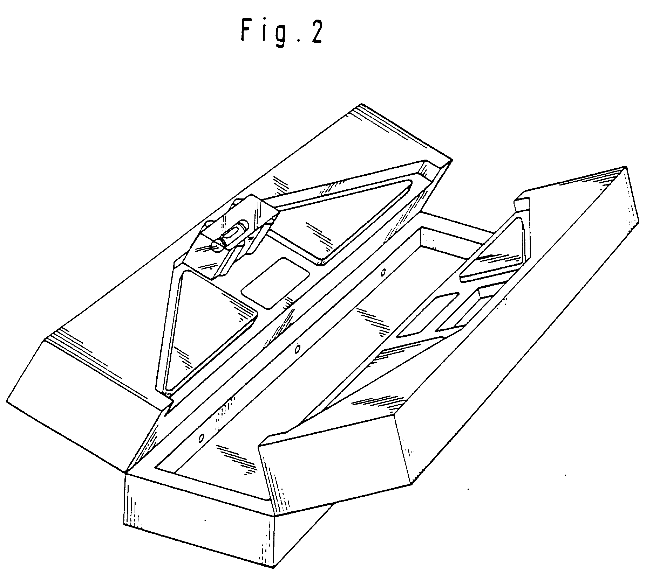

D'autres caractéristiques et avantages de l'invention ressortiront plus clairement de la description suivante, donnée uniquement à titre d'exemple non limitatif, ainsi que du dessin annexé dans lequel la figure 1 est une vue en perspective d'un mode de réalisation du niveau à bulle suivant l'invention, et la figure 2 est une vue perspective du moule d'injection pour la fabrication d'un niveau à bulle suivant l'invention.

Le niveau à bulle représenté sur la figure 1 est constitué essentiellement de 3 parties : la semelle, l'âme du corps et l'élément à bulle. La semelle 2 forme avec l'âme 3 du corps une seule pièce, appelé profilé. Le profilé a une découpe présentant un logement 4 pour l'élément à bulle 5. Ce logement se situe exactement au milieu de l'âme du corps pour améliorer le contact entre les faces latérales et le fond de l'élément à bulle 5. Le profilé 1 est élargi au niveau de la découpe 4 de façon à avoir la largeur de l'élément à bulle 5.

Partant de l'élément 5 qui est orienté au-dessus du centre de la semelle 2, l'âme 3 du corps profilé est chanfreiné vers les extrémités du niveau à bulle.

Le corps du niveau à bulle montré dans la figure 1 est moulé dans un moule pour coulage par injectioin comme le montre la figure 2. La matière à mouler est une résine polyester chargée de particules en verre. Ces particules en verre peuvent être soient des fibres longues, soient des fibres relativement courtes ou bien des billes. Le choix de la forme de ces particules en verre dépend des exigences posées au niveau à bulle ou bien à la facilité du procédé de fabrication.

Les particules de verre intégrées dans la résine apportent à cette résine thermodurcissable la rigidité exigée.

Une autre caractéristique essentielle suivant l'invention est le fait que l'élément à bulle soit fixé définitivement sur le profilé du niveau à bulle pendant le refroidissement de la résine dans le moule pour injection. L'ajustage ultérieur n'est donc pas nécessaire.

Comme le montre la figure 2, le moule à injection utilisé pour la fabrication du niveau à bulle selon l'invention comporte essentiellement 3 parties : une partie de fond et deux parties latérales qui se referment au-dessus de la première. Le moule est esquissé uniquement très schématiquement pour faire ressortir quelques caractéristiques essentielles selon l'invention. Ce sont les moyens de fixation d'un élément à bulle sur une des faces intérieures d'au moins une des parties latérales du moule. L'élément à bulle est donc arrêté par ce moyen de fixation, c'est à dire par un ensemble de petites broches placées dans des orifices pratiquées dans une au moins des parties latérales du moule au niveau des surfaces latérales et du fond du bloc à bulle. Ces broches extractables de l'extérieur du moule seront retirées du moule avant le durcissement complet de la résine. Le moule porté à la température de fusion de la résine injectée, est partiellement refroidi au niveau de l'élément à bulle pour que les températures de la résine injectée ne montent pas dans cette région à une température destructive pour la matière constituant le bloc de l'élément à bulle. Celle-ci est souvent en plastique résistant au choc, transparent par exemple en Altuglas (nom déposé). L'injection de la matière à mouler se fait à un moment où le moule n'est pas encore complètement fermé ce qui présente les avantages suivants :
Le risque d'apparition de cavités à l'intérieur de la matière à mouler est diminué par le fait que la matière répulse l'air compris dans le moule partiellement ouvert. En outre, comme le moule est complètement fermé après l'injection de la résine, il y a formation de bavures. Les bavures de forme prédéterminée sont prévues dans des zones non fonctionnelles et se prêtent facilement à un finissage à l'aide d'un outil d'ébavurage.

Après le refroidissement de la résine thermodurcissable le niveau à bulle est sorti du moule. L'élément à bulle fait bien corps avec le profilé. Pour améliorer l'aspect optique du niveau à bulle, il est possible de coiffer l'élément à bulle d'un boîtier pour cacher les endroits de contact entre les faces latérales et le pourtour de l'élément à bulle laissant visible les parties centrales de la surface supérieure et les surfaces latérales de l'élément à bulle.

Comme l'élément à bulle est inséré dans le moule pour injection avec précision, le réglage du niveau à bulle n'est plus nécessaire, et comme ce dernier fait corps avec le profilé, un déréglage n'est plus possible. Les éléments à bulle se trouvent parfaitement immobilisés et indéréglables. La fabrication est d'une grande simplicité ce qui conduit à des coûts de revient très bas. La résine thermodurcissable assure la robustesse exigée en étant beaucoup moins chère que l'aluminium.

L'invention n'est pas limitée aux formes de réalisation décrites ci-dessus et l'homme de l'art pourra y apporter diverses modifications, notamment en ce qui concerne le nombre de semelles, sans pour autant sortir de son cadre.

## Revendications

1. Niveau à bulle comprenant un corps (1) constitué d'un profilé de préférence en T ou en I avec un logement (4) dans lequel au moins un bloc à bulle (5) est fixé
caractérisé en ce que
le corps (1) est fabriqué en une résine thermodurcissable chargée de particules en verre comportant des bavures bien prédéterminées seulement sur les parties supérieures du niveau.

2. Niveau à bulle selon la revendication 1,
caractérisé en ce que
la résine thermodurcissable est une résine polyester chargée de particules de verre.

3. Niveau à bulle selon la revendication 1 ou 2,
caractérisé en ce que
la résine thermodurcissable est chargée de fibres de verre.

4. Niveau à bulle selon la revendication 1 ou 2,
caractérisé en ce que
la résine thermodurcissable est chargée de billes de verre.

5. Niveau à bulle selon la revendication 1 ou 2,
caractérisé en ce que
la résine thermodurcissable est chargée de billes de verre sur les faces externes de la pièce injectée et chargée de fibres à coeur.

6. Niveau à bulle selon une quelconque des revendications précédentes,
caractérisé en ce que
le bloc à bulle est couvert partiellement par un châssis ayant une fenêtre au niveau de la libelle et cachant le bord du bloc et du profilé.

7. Niveau à bulle selon une quelconque des revendications précédentes,
caractérisé en ce que
la résine thermodurcissable est colorée en pâte.

8. Procédé de fabrication d'un niveau à bulle selon une quelconque des revendications précédentes, par injection d'une matière thermodurcissable,
caractérisé par le fait que
le bloc à bulle est fixé par l'intermédiaire des broches retirables à une partie du moule pour injection, et par le fait que le moule porté à la température de fusion de la matière est refroidi partiellement dans la zone de l'emplacement du bloc à bulle.

9. Procédé de fabrication d'un niveau à bulle selon la revendication 1,
caractérisé par
l'utilisation d'un moule en trois ou quatre parties, une ou deux formant partiellement la ou les semelles et les deux autres se refermant au-dessus de la ou les semelles pour la formation de la partie supérieure du profilé avec insertion du bloc à bulle.

10. Procédé de fabrication d'un niveau à bulle selon la revendication 9,
caractérisé en ce que
la fermeture complète du moule s'effectue seulement après le remplissage du moule avec la résine thermodurcissable chargée ce qui conduit à la formation de bavures bien prédéterminées seulement sur les parties supérieures du niveau.

## Claims

1. A spirit level comprising a body (1) in the form of a preferably T or I profile with a recess (4) in which at least one bubble block (5) is fixed, characterised in that the body (1) is made from a thermosetting resin having a glass particle filler and comprising specifically predetermined flashes only on the top parts of the level.

2. A spirit level according to claim 1, characterised in that the thermosetting resin is a polyester resin having a glass particle filler.

3. A spirit level according to claim 1 or 2, characterised in that the thermosetting resin has a glass fibre filler.

4. A spirit level according to claim 1 or 2, characterised in that the thermosetting resin has a glass ball filler.

5. A spirit level according to claim 1 or 2, characterised in that the thermosetting resin has a glass ball filler on the outer surfaces of the injection moulding and a fibre filler in its core.

6. A spirit level according to any one of the preceding claims, characterised in that the bubble block is partially covered by a frame having a window at the level of the bubble and masking the edge of the block and of the profile.

7. A spirit level according to any one of the preceding claims, characterised in that the thermosetting resin is dyed in the mass.

8. A process for the production of a spirit level according to any one of the preceding claims, by injection of a thermosetting material, characterised in that the bubble block is fixed by means of withdrawable pins to a part of the injection mould and in that the mould brought to the melting temperature of the material is partially cooled in the zone of the bubble block location.

9. A process for the production of a spirit level according to claim 1, characterised by the use of a mould in three or four parts, one or two partially forming the base or bases and the other two closing above the base or bases to form the top part of the profile with insertion of the bubble block.

10. A process for the production of a bubble level according to claim 9, characterised in that complete closure of the mould is effected only after the mould has been filled with the thermosetting resin containing a filler, resulting in the formation of specifically predetermined flashes only on the top parts of the level.

## Patentansprüche

1. Libellenwaage mit einem vorzugsweise aus einem T- oder I-förmigen Profil bestehenden Körper (1) mit einem Sitz (4), in dem mindestens ein Libellenblock (5) befestigt ist, dadurch gekennzeichnet, daß der Körper (1) aus einem mit Glaspartikeln versetzten wärmeaushärtbaren Harz hergestellt ist, wobei der Körper vorbestimmte Preßgrate nur an dem oberen Teil der Waage aufweist.

2. Libellenwaage nach Anspruch 1, dadurch gekennzeichnet, daß das wärmeaushärtbare Harz ein Polyesterharz ist, welches mit Glaspartikeln versetzt ist.

3. Libellenwaage nach Anspruch 1 oder 2, dadurch gekennzeichnet, daß das wärmeaushärtbare Harz mit Glasfasern versetzt ist.

4. Libellenwaage nach Anspruch 1 oder 2, dadurch gekennzeichnet, daß das wärmeaushärtbare Harz mit Glaskugeln versetzt ist.

5. Libellenwaage nach einem der Ansprüche 1 oder 2, dadurch gekennzeichnet, daß das wärmeaushärtbare Harz an den Außenseiten des Körpers mit Glaskugeln versetzt ist und im Inneren des Körpers mit Glasfasern.

6. Libellenwaage nach einem der vorstehenden Ansprüche, dadurch gekennzeichnet, daß der Libellenblock teilweise mit einem Gehäuse abgedeckt ist, welches ein Fenster im Bereich der Libelle aufweist und den Rand des Libellenblocks und des Profilkörpers abdeckt.

7. Libellenwaage nach einem der vorstehenden Ansprüche, dadurch gekennzeichnet, daß das wärmeaushärtbare Harz in der Masse gefärbt ist.

8. Verfahren zur Herstellung einer Libellenwaage nach einem der vorstehenden Ansprüche durch Spritzgießen einer wärmeaushärtbaren Masse, dadurch gekennzeichnet, daß der Libellenblock mit entfernbaren Haltestiften an einem Teil der Gießform während des Einspritzens befestigt ist und dadurch, daß die auf die Schmelztemperatur der Masse eingestellte Gießform im Bereich des Libellenblocks gekühlt ist.

9. Verfahren zur Herstellung eines Libellenblocks nach Anspruch 1, gekennzeichnet durch die Verwendung einer Gießform, die aus drei oder vier Teilen besteht, von denen ein Teil oder zwei Teile die Auflagefläche formen und die beiden anderen Teile sich über der oder den Auflageflächen schließen, um den oberen Teil des Profilkörpers mit dem Einsetzen des Libellenblocks zu bilden.

10. Herstellungsverfahren einer Libellenwaage nach Anspruch 9, dadurch gekennzeichnet, daß das vollständige Schließen der Form erst erfolgt, wenn die Form mit dem wärmeaushärtbaren, versetzten Harz gefüllt ist, was zur Ausbildung vorbestimmter Preßgrate nur auf den oberen Teilen der Waage führt.
